# EUROPEAN PATENT APPLICATION

(11) **EP 4 722 077 A1**
(43) Date of publication of application: **08.04.2026**
(21) Application number: 24810836.7
(22) Date of filing: 25.04.2024
(51) Int. Cl.: B62D 1/06, G01B 7/00, H05B 3/20

(54) **STEERING WHEEL**

(30) Priority: 24.05.2023 JP 2023085405
(71) Applicant: Autoliv Development AB, 44783 Vargarda (SE)
(72) Inventor: ONUKI, Chido, Yokohama-shi, Kanagawa 222-8580 (JP); KIM, Jinkeun, Yokohama-shi, Kanagawa 222-8580 (JP); KANAGAMI, Syunsuke, Yokohama-shi, Kanagawa 222-8580 (JP); KADOYA, Rieko, Yokohama-shi, Kanagawa 222-8580 (JP)
(74) Representative: Schön, Thilo
(86) International application number: PCT/JP2024/016230
(87) International publication number: WO 2024/241828

(57) **Abstract**

To improve the usefulness of a steering wheel. The steering wheel 1 has a grip body 2 formed so as to be gripped by a driver, and the grip body 2 includes a core metal 3 and at least one support body 4 provided on the core metal 3 so as to cover at least a part of the core metal 3. With the steering wheel 1, at least a heater electrode layer 5a and a sense electrode layer 5e, or an integrated electrode layer 5f in which these layers are integrally formed as a single layer, are provided on a second surface of the support body 4 opposite to a first surface on the core metal 3 side, and a resin mold layer 6 is provided on the grip body 2 so as to collectively cover each of the layers on the support body 4 together with the support body 4.

## Description

### TECHNICAL FIELD

The present invention relates to a steering wheel.

### BACKGROUND ART

Patent document 1 describes an electrode structure body provided on a steering wheel provided in a vehicle, the electrode structure body comprising an insulating body, a first electrode provided on a first surface of the insulating body which is the surface facing the core metal of the steering wheel, a second electrode provided on a second surface of the insulating body which is the surface opposite to the first surface, a protruding part protruding from the insulating body toward the core metal, and a locking part that locks onto the core metal. According to Patent Document 1, the electrode structure body can prevent the manufacturing costs of the steering wheel from rising while ensuring the appearance of the steering wheel.

### RELATED ART DOCUMENTS

### PATENT DOCUMENTS

Patent Document 1: Japanese Unexamined Patent Application 2023-032819

### SUMMARY OF THE INVENTION

### PROBLEM TO BE SOLVED BY THE INVENTION

However, there is room for further improvement in the usability of steering wheels. For example, in Patent Document 1, sufficient consideration is not given to the configuration of the electrodes provided on the steering wheel and the feeling when the driver grips the steering wheel.

Therefore, an object of the present invention is to improve the usability of a steering wheel.

### MEANS FOR SOLVING THE PROBLEM

A steering wheel according to an aspect of the present invention, includes: a grip body formed so as to be gripped by a driver, wherein the grip body includes a core and at least one support body disposed on the core so as to cover at least a portion of the core,
at least a heater electrode layer and a sense electrode layer, or an integral electrode layer in which these layers are integrally configured as a single layer, are provided on a second surface of the support body opposite to a first surface of the support body on the core side, and
a resin mold layer is provided on the grip body so as to cover the support body together with each of the layers on the support body.

According to this aspect, the heater electrode layer and the sense electrode layer (or an integrated electrode layer in which these are integrated) are provided on a support body covering the core metal, thereby improving the efficiency of heating the grip body and the accuracy of sensing gripping of the grip body. Furthermore, each layer on the support body, including the sense electrode layer, can be protected by a resin mold layer.

A steering wheel according to another aspect of the present invention includes:
a grip body formed so as to be gripped by a driver, wherein
the grip body includes a core metal and a support body provided on the core metal so as to cover at least a part of the core metal,
the support body being provided with one or more electrode layers, and
the grip body being provided with a resin mold layer having flexibility equal to or less than that of the support body, and being provided so as to collectively cover the one or more electrode layers together with the support body.

According to this aspect, similar to the above, one or more electrode layers on the support body can be protected by the resin mold layer. In addition, since the support body is as soft as or softer than the outer resin molded layer, when the driver grips the grip body, for example, the support body can deform in accordance with the contraction and deformation of the resin molded layer. As a result, a foreign body sensation can be prevented from being caused by the support body on the steering wheel, thereby allowing the driver to experience a comfortable gripping feel.

### EFFECT OF THE INVENTION

According to the present invention, the usability of the steering wheel can be improved.

### BRIEF DESCRIPTION OF THE DRAWINGS

FIG. 1 is a diagram depicting an entire steering wheel according to an embodiment of the present invention.
FIG. 2 is a cross-sectional view along line II-II in FIG. 1.
FIG. 3 is a cross-sectional view along line III-III in FIG. 2.
FIG. 4 is a cross-sectional view depicting the configuration of a resin support body and electrode structure body of the steering wheel according to the present Embodiment, together with a resin mold layer.
FIG. 5 is a cross-sectional view depicting the configuration of the resin support body and electrode structure body of the steering wheel according to the present Embodiment, together with the resin mold layer.
FIG. 6 is a diagram depicting an entire steering wheel according to a Modified Example of the present Embodiment.

### EMBODIMENTS OF THE INVENTION

A steering wheel 1 according to a preferred embodiment of the present invention will be described.

The steering wheel 1 is provided on the driver seat side of a vehicle such as an automobile, and has a plurality of functions. For example, the steering wheel 1 functions as a steering device for the vehicle. Specifically, the steering wheel is generally attached in an inclined state to an upper end part of a steering shaft provided on a vehicle body. Furthermore, steering force from the driver is transmitted from the steering wheel 1 to the steering shaft, and transmitted to wheels via a steering gear or the like, thereby changing the direction of the wheels.

In the following, for convenience of explanation, the three axes of XYZ are defined as follows. The axial direction of the steering shaft is defined as the "Z-axis direction", or a first direction, the direction connecting 9 o'clock and 3 o'clock on an analog 12-hour clock on a flat surface orthogonal to the Z-axis direction is defined as the "X-axis direction", and the direction connecting 12 o'clock and 6 o'clock on the same clock is defined as the "Y-axis direction". The X-axis direction may be a direction corresponding to the width direction of the steering wheel 1 or the vehicle. A plane defined by the X-axis and the Y-axis is called an "XY plane".

### <1. Configuration of steering wheel 1>

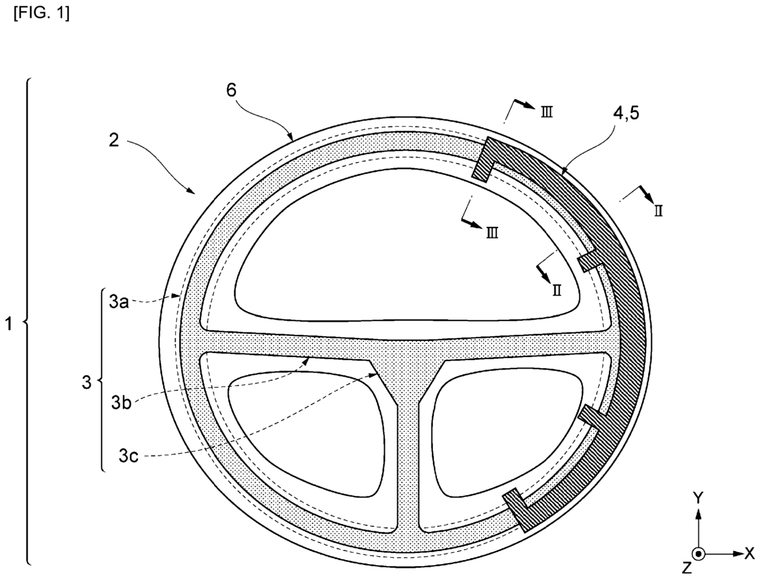

As depicted in FIG. 1, a steering wheel 1 includes a grip body 2 configured to be gripped by a driver. The grip body 2 includes a core metal 3, a support body 4, an electrode structure body 5, and a resin mold layer 6.

The core metal 3 forms the skeleton of the steering wheel 1. The core metal 3 has a boss part 3c at the center of the core metal 3, an outer periphery part 3a, and a spoke part 3b connecting the boss part 3c and the outer periphery part 3a. The boss part 3c is connected to the steering shaft. There are three spokes 3b, which extend in three directions from the base part 3c [sic] and are connected to the outer periphery part 3a. The outer periphery part 3a is not limited to a circular ring shape, but may have an irregular shape. For example, the outer periphery part 3a may be D-shaped or U-shaped with the lower side being horizontal.

The support body 4 is provided on the core metal 3 so as to cover at least a part of the core metal 3. For example, the support body 4 is provided on the outer peripheral surface of the outer periphery part 3a of the core metal 3 so as to cover a part of the outer periphery part 3a. In one embodiment, the support body 4 is composed of a resin. That is, in one embodiment, the support body 4 can be a resin support body. In the following description, unless otherwise specified, the support body 4 will be described as being a resin support body. The support resin, which is the material of the support body 4, typically has flexibility equal to or greater than that of the resin for molding, which is the material of the resin mold layer 6 described below. In other words, the support resin is more easily elastically deformed than the resin for molding. Alternatively, the modulus of elasticity of the support resin is smaller than the modulus of elasticity of the resin for molding. The support body resin is, for example, a soft urethane resin and a semi-hard urethane resin, but is not limited to these.

In another embodiment, the support body 4 may cover the entire outer periphery part 3a, or may cover the outer periphery part 3a intermittently in the circumferential direction. The number, size, form, and the like of the support body 4 are not limited. For example, the support body 4 may be made up of one component type, or may be made up of multiple component types.

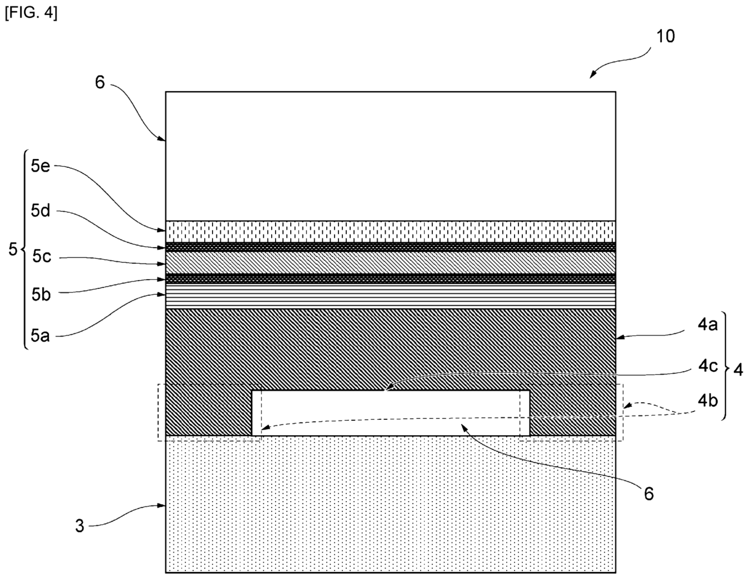

The electrode structure body 5 is provided on the support body 4. The electrode structure body 5 includes one or more electrode layers. The one or more electrode layers may include, for example, a heater electrode layer 5a, a ground electrode layer 5c, and a sense electrode layer 5e. Here, the one or more electrode layers in the electrode structure body 5 include, in order from the direction away from the core metal 3, at least a heater electrode layer 5a, a ground electrode layer 5c, and a sense electrode layer 5e (details will be described later with reference to FIG. 4). That is, the heater electrode layer 5a, the ground electrode layer 5c, and the sense electrode layer 5e are sequentially laminated on the support body 4 in this order in the direction away from the core metal 3. In the present disclosure, the state in which "layer A and layer B are laminated" may mean that layer A and layer B are overlain with one or more other layers sandwiched therebetween, or may mean that layer A and layer B are in direct contact with each other without any other layers sandwiched therebetween.

The resin mold layer 6 is provided so as to cover the support body 4 and the layers on the support body 4 collectively. Each layer on the support body 4 is, for example, one or more electrode layers in the electrode structure body 5. When the driver turns the steering wheel 1, they typically touch the resin mold layer 6. The resin mold layer 6 is formed using a resin for molding as a material. Since the resin mold layer 6 is the part that the driver touches, the resin for molding may be made of a material with high grip (in other words, a material that elastically deforms slightly in response to the driver's grip and has a high coefficient of friction). Examples of resin for moldings include, but are not limited to, semi-rigid urethane resin and rigid urethane resin and the like.

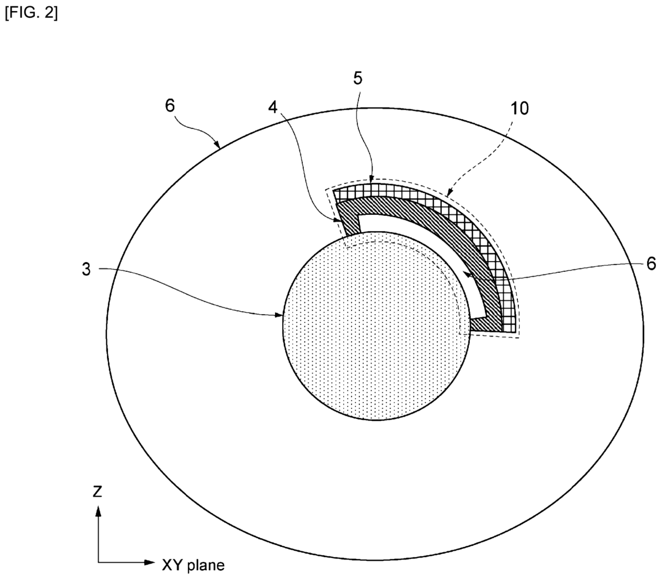

Next, an example of a cross section of the steering wheel 1 will be described with reference to FIG. 2. FIG. 2 is a cross-sectional view of the steering wheel 1 taken along the line II-II in FIG. 1.

A support body 4 is provided on the surface of the core metal 3 so that the inner surface thereof is in contact with the core metal 3. In the present Embodiment, the core metal 3 is described as having a circular cross section, but is not limited to this. The cross section of the core metal 3 may be, for example, polygonal or U-shaped.

The support body 4 includes a main body part 4a, a rib 4b, and a recess part 4c (see FIG. 4). The support body 4 is provided with a rib 4b on the inner surface of the main body part 4a so that a recess part 4c is formed between the main body part 4a and the core metal 3. The rib 4b and the recess part 4c will be described later with reference to FIG. 4.

The electrode structure body 5 is provided on the outer surface side of the support body 4 (in other words, the surface opposite to the metal core metal 3 when viewed from the support body 4). In the present Embodiment, the electrode structure body 5 is described as being provided so as to cover the entire outer surface side of the support body 4, but is not limited to this. In another embodiment, the electrode structure body 5 may be provided on a part of the outer surface of the support body 4, for example, in the form of a tape along the outer periphery part 3a.

The resin mold layer 6 is provided so as to cover the core metal 3, the support body 4, and the electrode structure body 5 (hereinafter, the core metal 3, the support body 4, and the electrode structure body 5 will be collectively referred to as the "internal structure body"). A part of the resin mold layer 6 is also provided in the recess part 4c. In the present Embodiment, the resin mold layer 6 is described as covering the entire internal structure body so as not to expose the internal structure body to the outside, but is not limited to this. For example, a part of the core metal 3 may not be covered by the resin mold layer 6 and may be exposed to the outside.

The core 3, the support body 4, the electrode structure 5, and the resin mold layer 6 may have at least part of the portions thereof bonded (affixed or adhered) together with an adhesive or the like, and may also be secured by the resin mold layer 6 covering the entirety thereof. Note that in the present Embodiment, the state in which a portion is "in contact" with another portion includes the state in which those portions are bonded together with an adhesive (in other words, the state in which an adhesive is interposed therebetween).

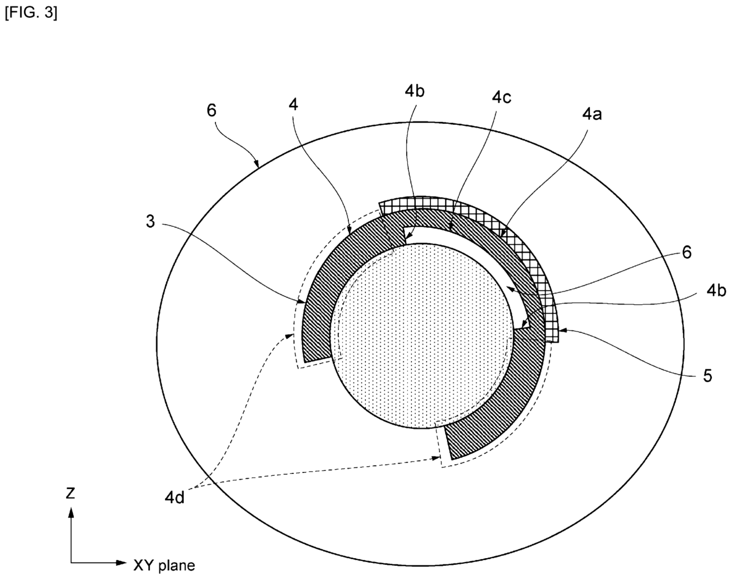

Next, another example of a cross section of the steering wheel 1 will be described with reference to FIG. 3. FIG. 3 is a cross-sectional view of the steering wheel 1 taken along line III-III in FIG. 1.

The support body 4 engages with the core metal 3 at the position of the cross section III-III. Specifically, the support body 4 has, in addition to the main body 4a, the rib 4b and the recess part 4c, and engaging parts 4d, 4d for engaging with the core metal 3. The engaging parts 4d, 4d are formed at least at one position (four positions in this example: see FIG. 1) in the longitudinal direction of the support body 4. The engaging parts 4d, 4d extend in the circumferential direction from both end parts of the main body part 4a. The engaging parts 4d, 4d are formed, for example, in an arc shape, and cover a part of the outer peripheral surface of the core metal 3 to engage with this part. The inner surfaces of the engaging parts 4d, 4d are curved in accordance with the curvature of the outer peripheral surface of the core metal 3 so as to overlap with the outer peripheral surface of the core metal 3. The engaging parts 4d, 4d may cover most of the outer periphery of the core metal 3 together with the main body part 4a. For example, the inner surface side of the cross section of the support body 4 at the position of the cross section III-III may cover more than half of the outer periphery of the cross section of the core metal 3 at that position. Thereby, the support body 4 can be attached to the core metal 3 without using adhesive or the like, thereby reducing the number of steps and preventing a decrease in yield due to variations in the amount of adhesive applied.

The support body 4 also has a recess part 4c at the position of the III-III cross section, similar to the position of the II-II cross section. In this manner, the support body 4 has the recess part 4c over the entire length direction (in other words, the direction along the outer periphery part 3a when the support body 4 is attached to the core metal 3).

Next, the detailed configuration of the support body 4 and the electrode structure body 5 will be described with reference to FIG. 4. FIG. 4 is an enlarged view of a portion including region 10 in FIG. 2, depicting the state in which a support body 4, an electrode structure body 5, and a resin mold layer 6 are layered in this order from the core metal 3 outward. Note that in FIG. 4, the portion including the arc-shaped region 10 is depicted converted into a rectangle so as to maintain the laminated appearance.

In the support body 4, the rib 4b protrudes from the main body part 4a toward the core metal 3, thereby forming a recess part 4c between the main body part 4a and the core metal 3. When manufacturing the steering wheel 1, the recess part 4c is filled with resin for the resin mold layer 6, and as a result, a part of the resin mold layer 6 is formed in the recess part 4c.

The electrode structure body 5 includes, in order from the direction away from the core metal 3, the heater electrode layer 5a, a second insulating layer 5b, the ground electrode layer 5c, a third insulating layer 5d, and the sense electrode layer 5e. That is, in the electrode structure body 5, the heater electrode layer 5a, the second insulating layer 5b, the ground electrode layer 5c, the third insulating layer 5d, and the sense electrode layer 5e are provided in a laminated arrangement. The heater electrode layer 5a and the sense electrode layer 5e can be formed by various methods. For example, the heater electrode layer 5a and the sense electrode layer 5e may be composed of a metal foil, a metal plate, a thin film layer formed by vapor deposition of a metal, or a sheet-like member having a mesh electrode.

The heater electrode layer 5a is a layer for heating the grip body 2. The heater electrode layer 5a is typically a metal or resin layer containing a heating element. The heating element may be either a metallic heating element or a non-metallic heating element. The metal heating element is a heating element using, for example, iron, chromium, aluminum, nickel, molybdenum, tungsten, or the like. The non-metallic heating element is, for example, a heating element using silicon carbide, molybdenum silicide, lanthanum chromite, carbon, or the like.

The second insulating layer 5b is a layer for electrically insulating the heater electrode layer 5a from the ground electrode layer 5c.

The ground electrode layer 5c is a layer for suppressing noise generated in the sense electrode layer 5e. The ground electrode layer 5c is typically connected to the ground of the circuit in which the electrode layer is included. The ground electrode layer 5c suppresses noise from being generated in the sense electrode layer 5e due to the influence of the core metal 3 and the heater electrode layer 5a, for example. The ground electrode layer 5c can also be called an electrostatic shield, an electromagnetic shield, or a magnetic shield. The material of the ground electrode layer 5c is, for example, a metal such as iron or aluminum, but any material may be used as long as the material can block noise generated in the sense electrode layer 5e. Note that in the present Embodiment, noise includes unintended variations (in other words, non-ideal behavior) that occur in the circuitry of the electrode layer. The noise includes, for example, parasitic capacitance, parasitic resistance, parasitic inductance, induced current, and induced electromotive force.

The third insulating layer 5d is a layer for electrically insulating the ground electrode layer 5c and the sense electrode layer 5e.

The sense electrode layer 5e is a layer for sensing the grip of the grip body 2 by the driver. The sense electrode layer 5e may be, for example, a sensor sheet whose capacitance changes in response to changes in the applied pressure. The sense electrode layer 5e may sense how much force the driver is gripping the grip body 2, or may detect whether the driver is gripping the grip body 2 or not in binary form. The sense electrode layer 5e is typically provided as the outermost of the electrode layers (that is, at a position farthest from the core 3). The sense electrode layer 5e may be in contact with the resin mold layer 6.

The heater electrode layer 5a may operate based on the sensing result of the sense electrode layer 5e. Specifically, a computer provided in the vehicle may obtain information relating to the sensing result of the sense electrode layer 5e, and control the operation of the heater electrode layer 5a based on the information. For example, a computer provided in the vehicle may heat the grip body 2 using the heater electrode layer 5a while the driver is gripping the grip body 2.

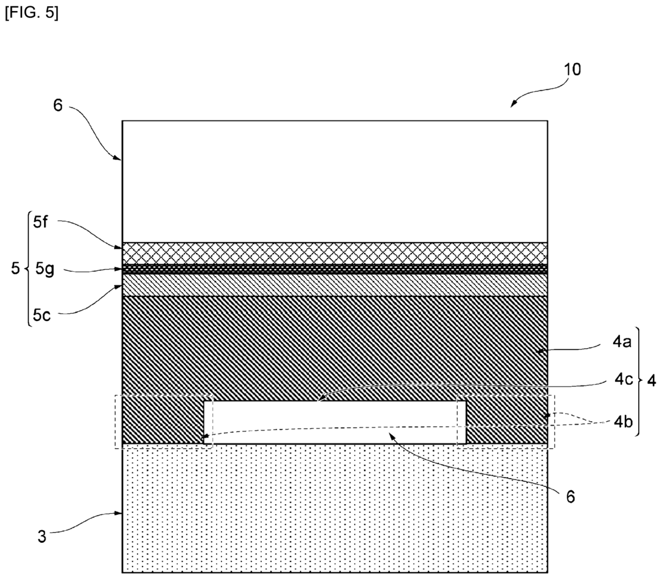

FIG. 5 is a diagram depicting another example of the configuration of the electrode structure body 5. In FIG. 5, the electrode structure body 5 includes an integrated electrode layer 5f in which the heater electrode layer 5a and the sense electrode layer 5e are integrated into one layer. The integrated electrode layer 5f has both the function of the heater electrode layer 5a and the function of the sense electrode layer 5e. In addition, in the electrode structure body 5 of FIG. 5, at least a ground electrode layer 5c and a first insulating layer 5g may be provided between the integrated electrode layer 5f and the support body 4 in this order in the direction away from the core metal 3. The first insulating layer 5g is a layer for electrically insulating the integrated electrode layer 5f from the ground electrode layer 5c.

### <2. Manufacturing method of steering wheel 1>

An example of a method for manufacturing the steering wheel 1 will now be described. In this manufacturing method, as a preparatory step, the core 3, the support body 4, and the electrode structure 5 of the grip body 2 are first fabricated. After the preparatory step, these are mutually attached to form an internal structure body, and lastly, the resin mold layer 6 is formed. The process from the preparation stage onwards is described below.

Step 1: First, the support body 4 is attached to the core metal 3. Here, the support body 4 is attached to the core metal 3 by engaging the engaging parts 4d, 4d of the support body 4 with the core metal 3. In another embodiment, the engaging parts 4d, 4d may be omitted, and in this case, an adhesive may be applied to the inner surface of the support body 4 to adhere the support body 4 and the core metal 3 together. In either method, the ribs 4b of the support body 4 form a recess part 4c between the support body 4 and the core metal 3.

Step 2: Next, the electrode structure body 5 is attached to the support body 4 so that the heater electrode layer 5a is in contact with the support body 4, thereby forming an internal structure body. The electrode structure body 5 may be attached to a groove provided in advance in the support body 4, or an adhesive may be applied to the inner surface of the electrode structure body 5 so as to adhere to the support body 4.

Step 3: Next, the internal structure body obtained in step 2 is provided inside a mold corresponding to the shape of the grip body 2. The mold is prepared with an inlet for pouring in resin for molding.

Step 4: The resin for molding is poured into the inlet in a fluid state. As a result, the entire internal structure body is covered with the resin for molding. Here, the recess part 4c formed in step 1 is also filled with the resin for molding.

Step 5: The resin for molding is cured. As a result, the resin mold layer 6 is formed, and the manufacturing of the steering wheel 1 is completed.

### <3. Functions and Effects of Steering Wheel 1>

According to the present embodiment described above, the steering wheel 1 is a steering wheel 1 having a grip body 2 formed so as to be gripped by a driver, the grip body 2 having a core metal 3 and at least one support body 4 provided on the core metal 3 so as to cover at least a part of the core metal 3, and at least a heater electrode layer 5a, a sense electrode layer 5e, or an integrated electrode layer 5f in which these layers are integrally formed as a single layer is provided on a second surface of the support body 4 opposite a first surface thereof facing the core metal 3, and a resin molded layer 6 is provided on the grip body 2 so as to cover each layer on the support body 4 together with the support body 4.

This configuration improves the usability of the steering wheel 1. Specifically, the sense electrode layer 5e is provided on the support body 4, so the grip of the driver on the grip body 2 can be accurately sensed.

In addition, the heater electrode layer 5a and the sense electrode layer 5e are laminated on the support body 4 in this order in the direction away from the core metal 3.

With this configuration, the sense electrode layer 5e is disposed on the outside of the electrode structure body 5 (in other words, closer to the surface of the grip 2), so that gripping of the grip 2 by the driver can be sensed more accurately.

Between the integrated electrode layer 5f and the support body 4, at least the ground electrode layer 5c and the first insulating layer 5g are laminated in this order in the direction away from the core metal 3.

This configuration allows the integrated electrode layer 5f and the ground electrode layer 5c to operate without interfering with each other. Since the integral electrode layer 5f is provided on the side of the ground electrode layer 5c opposite to the core 3, which can generate noise, noise that could otherwise occur in the integral electrode layer 5f can be suppressed.

Furthermore, on the support body 4, at least a heater electrode layer 5a, a ground electrode layer 5c, and a sense electrode layer 5e are laminated in this order in the direction away from the core metal 3.

With this configuration, since the sense electrode layer 5e is provided on the side of the ground electrode layer 5c opposite to that of the core 3 and the heater electrode layer 5a, which can generate noise, noise that could otherwise occur in the sense electrode layer 5e can be suppressed.

A second insulating layer 5b is provided between the heater electrode layer 5a and the ground electrode layer 5c, and a third insulating layer 5d is provided between the ground electrode layer 5c and the sense electrode layer 5e.

This configuration allows the heater electrode layer 5a, the ground electrode layer 5c, and the sense electrode layer 5e to operate without interfering with each other. That is, the accuracy of sensing by the sense electrode layer 5e can be improved.

In addition, the support body 4 has a recess part 4c formed in relation to the core metal 3, and a part of the resin mold layer 6 is formed in the recess part 4c.

This configuration can prevent deterioration of sensing accuracy of the sense electrode layer 5e caused by manufacturing variation. Typically, in the process of covering the internal structure body with a resin for molding (see step 4 above), the resin for molding is injected into a mold under high pressure. At this time, if the support body 4 does not have the recess part 4c, the resin for molding may unintentionally enter in between the support body 4 and the core metal 3. In this case, the distance between the core metal 3 and the sense electrode layer 5e varies with each position. As a result, the parasitic capacitance generated between the core metal 3 and the sense electrode layer 5e also differs for each position, resulting in deterioration in sensing accuracy of the sense electrode layer 5e. In contrast, in the above embodiment, the support body 4 has a recess part 4c, which prevents resin for molding from "unintentionally" entering between the support body 4 and the core wire 3, thereby suppressing deterioration in the grip sensing accuracy.

The sense electrode layer 5e is in contact with the resin mold layer 6.

This configuration can suppress deterioration in the sensing accuracy of grasping by the sense electrode layer 5e. The resin mold layer 6 is typically provided as a surface layer of the steering wheel 1. The sense electrode layer 5e is less susceptible to the effects of noise that may be generated from the core metal 3 if provided as far to the outside as possible. Therefore, by providing the sense electrode layer 5e so as to be in contact with the resin mold layer 6, the effect of noise can be reduced and the sensing accuracy of the grip can be ensured.

In addition, the sense electrode layer 5e is a layer for sensing the driver's grip of the grip body 2, and the heater electrode layer 5a is a layer for heating the grip body 2 based on the sensing result of the sense electrode layer 5e.

With this configuration, the heater electrode layer 5a can effectively heat the grip body 2. For example, the heater electrode layer 5a heats the grip body 2 while the driver is gripping the grip body 2, and stops heating while the driver is not gripping, thereby reducing power consumption.

In addition, the resin mold layer 6 may be formed from a resin for molding (first resin), and the support body 4 is formed from a support resin (second resin) having flexibility equal to or greater than that of the resin for molding.

This configuration can improve the feel when the driver grips the grip body 2. Specifically, if the support resin is less flexible than the resin for molding (in other words, the support resin is harder than the resin for molding), a driver gripping the grip 2 may feel a hardness inside the grip body 2. In contrast, if the above-described configuration is adopted, the support resin will deform in response to the deformation of the resin for molding, allowing the driver to experience a comfortable grip. Furthermore, since the support body 4 conforms to deformation of the resin mold layer 6, the appearance of the steering wheel 1 can also be improved.

### <4. Modified Examples of Steering Wheel 1>

The embodiment described above is for ease of understanding of the present invention and is not intended to be construed as limiting the present invention. Elements included in the embodiment, as well as arrangements, materials, conditions, shapes, sizes, and the like thereof, are not limited to those exemplified, but rather can be appropriately changed.

For example, in the above embodiment, the grip body 2 is described as having a single support body 4, but is not limited to this. Specifically, there may be a plurality of support bodies 4. In this case, the resin mold layer 6 may be provided over the entire circumference of the core metal 3 so that a single layer collectively covers the plurality of support bodies 4. That is, the steering wheel 1 may be configured such that the support body 4 is divided in the circumferential direction and is covered with the resin mold layer 6 that is not divided in the same direction.

In some embodiments, the grip body 2 may include a first support and a second support as the support body 4, and a heater electrode layer 5a, a ground electrode layer 5c, and a sense electrode layer 5e may be laminated on each of the first support and the second support in that order in the direction away from the core metal 3. The heater electrode layer 5a of the first support body may be a layer for heating the location of the grip body 2 where the first support body is provided, and the heater electrode layer 5a of the second support body may be a layer for heating the location of the grip body 2 where the second support body is provided. That is, the steering wheel 1 may be configured such that the portion of the steering wheel 1 that corresponds to the location gripped by the driver is heated.

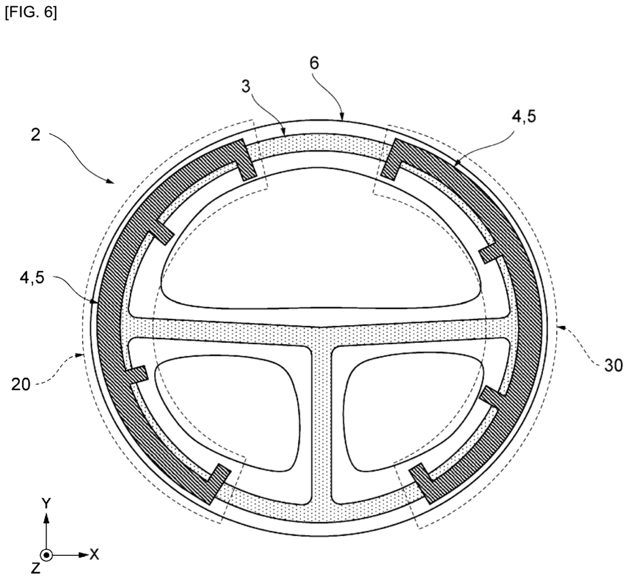

A steering wheel 1 according to a modified example will be described with reference to FIG. 6. The steering wheel 1 in FIG. 6 includes the support body 4 (corresponding to the first support body) positioned in a region 20 and the support body 4 (corresponding to the second support body) positioned in a region 30. An electrode structure body 5 is provided on each of these support bodies 4.

When the driver grips the support body 4 positioned in the region 20, the heater electrode layer 5a of the support body 4 heats the portion of the grip body 2 that is included in the region 20. Similarly, when the driver grips the support body 4 positioned in the region 30, the heater electrode layer 5a of the support body 4 heats the portion of the grip body 2 included in the region 30.

With this configuration, the heater electrode layer 5a can effectively heat the grip body 2. For example, the heater electrode layer 5a heats the grip body 2 while the driver is gripping the part of the grip body 2 included in the region 20, and does not heat other parts, thereby reducing power consumption.

In the embodiment described above, an example has been described in which the support body 4 and the electrode structure body 5 are provided on a part of the outer periphery part 3a, but the support body 4 and the electrode structure body 5 may be provided over the entire periphery of the outer periphery part 3a. In this case, the heater electrode layer 5a may heat the entire grip body 2 regardless of where the driver grips the grip body 2 (in other words, regardless of which position of the sense electrode layer 5e is sensing the gripping).

In the embodiment described above, the electrode structure body 5 has been described as including at least the heater electrode layer 5a, the ground electrode layer 5c, and the sense electrode layer 5e. However, one or more of the electrode layers of the electrode structure body 5 may further include a cooling electrode layer, for example, using a Peltier element.

In the embodiment described above, the outermost layer of the grip body 2 is the resin mold layer 6, but is not limited to this. For example, a leather layer may be provided on the outside of the resin mold layer 6.

Note that typically, the support body 4 is integrally formed from the surface on which the layers are provided on the support body 4 toward the core metal 3. That is, the support body 4 typically does not include electrodes or the like inside.

In one embodiment, the support body 4 is made of an insulating material. In one embodiment, the support body 4 is made of wood, rubber, and the like. In addition, in other embodiments, the support body 4 may also be metal, for example coated with an insulating material. However, when emphasis is placed on load resistance and material costs, the support body 4 is preferably made of resin.

### <5. Additional Considerations for Various Aspects>

### <Addendum 1>

A steering wheel 1, includes:
a grip body 2 formed so as to be gripped by a driver, wherein
the grip body 2 includes a core 3 and at least one support body 4 disposed on the core 3 so as to cover at least a portion of the core 3;
at least a heater electrode layer 5a and a sense electrode layer 5e, or an integral electrode layer 5f in which these layers are integrally configured as a single layer, are provided on a second surface of the support body opposite to a first surface of the support body 4 on the core 3 side; and
a resin mold layer 6 is provided on the grip body 2 so as to cover the support body 4 together with each of the layers on the support body 4.

### <Addendum 2>

With the steering wheel 1 described in Addendum 1, the heater electrode layer 5a and the sense electrode layer 5e may be laminated on the support body 4 in this order in the direction away from the core metal 3.

### <Addendum 3>

With the steering wheel 1 described in Addendum 1, at least a ground electrode layer 5c and a first insulating layer 5g may be laminated between the integrated electrode layer 5f and the support body 4 in this order in the direction away from the core metal 3.

### <Addendum 4>

With the steering wheel 1 described in Addendum 1, at least a heater electrode layer 5a, a ground electrode layer 5c, and a sense electrode layer 5e may be laminated on the support body 4 in this order in the direction away from the core metal 3.

### <Addendum 5>

With the steering wheel 1 described in Addendum 1, a second insulating layer 5b may be provided between the heater electrode layer 5a and the ground electrode layer 5c.

### <Addendum 6>

With the steering wheel 1 described in Addendum 1 or 2, a third insulating layer 5d may be provided between the ground electrode layer 5c and the sense electrode layer 5e.

### <Addendum 7>

With the steering wheel 1 described in Addendum 1 to 6, there may be a plurality of support bodies 4, and the resin molded layer 6 may be provided around the entire circumference of the core metal 3 so that a single layer collectively covers the plurality of support bodies 4.

### <Addendum 8>

With the steering wheel 1 described in Addendum 1 to 7, the grip body 2 may include a first support body and a second support body as the support body 4, and a heater electrode layer 5a, a ground electrode layer 5c, and a sense electrode layer 5e may be laminated on each of the first support body and the second support body in that order in the direction away from the core metal 3, and the heater electrode layer 5a of the first support body may be a layer for heating the location of the grip body 2 where the first support is provided, and the heater electrode layer 5a of the second support may be a layer for heating the location of the grip body 2 where the second support is provided.

### <Addendum 9>

With the steering wheel 1 described in Addendum 1 to 8, the sense electrode layer 5e may be a layer for sensing the driver's grip of the grip body 2, and the heater electrode layer 5a may be a layer for heating the grip body 2 based on the sensing result of the sense electrode layer 5e.

### <Addendum 10>

With the steering wheel 1 described in Addendum 1 to 9, the core metal 3 may have an outer periphery part 3a, and the support body 4 may be provided to cover a part of the outer periphery part 3a.

### <Addendum 11>

With the steering wheel 1 described in Addendum 1 to 10, the support body 4 may have a recess part 4c relative to the core metal 3, and a part of the resin mold layer 6 may be formed in the recess part 4c.

### <Addendum 12>

With the steering wheel 1 described in Addendum 1 to 11, the sense electrode layer 5e may be in contact with the resin mold layer 6.

### <Addendum 13>

With the steering wheel 1 described in Addendum 1 to 12, the resin molded layer 6 may be formed from a first resin, and the support body 4 may be formed from a second resin having flexibility equal to or greater than that of the first resin.

### <Addendum 14>

With the steering wheel 1 described in Addendum 1 to 13, the resin mold layer 6 may further cover the core metal 3.

### <Addendum 15>

A steering wheel 1 includes:
a grip body 2 formed so as to be gripped by a driver, wherein
the grip body 2 includes a core metal 3 and a support body 4 provided on the core metal 3 so as to cover at least a part of the core metal 3,
the support body 4 being provided with one or more electrode layers, and
the grip body 2 being provided with a resin mold layer 6 having flexibility equal to or less than that of the support body 4, and being provided so as to collectively cover the one or more electrode layers together with the support body 4.

### DESCRIPTION OF CODES

1. Steering wheel, 2. Grip body, 3. Core metal, 3a. Outer periphery part, 4. Support body, a. Main body part, 4b. Rib, 4c. Recess part, 4d. Engaging part, 5. Electrode structure body, 5a. Heater electrode layer, 5b. Second insulating layer, 5c. Ground electrode layer, 5d. Third insulating layer, 5e. Sense electrode layer, 5f. Integrated electrode layer, 5g. First insulating layer, 6. Resin mold layer.

## Claims

1. A steering wheel comprising:
a grip body formed so as to be gripped by a driver, wherein
the grip body includes a core and at least one support body disposed on the core so as to cover at least a portion of the core,
at least a heater electrode layer and a sense electrode layer, or an integral electrode layer in which these layers are integrally configured as a single layer, are provided on a second surface of the support body opposite to a first surface of the support body on the core side, and
a resin mold layer is provided on the grip body so as to cover the support body together with each of the layers on the support body.

2. The steering wheel according to claim 1, wherein the heater electrode layer and the sense electrode layer are laminated on the support body in this order in a direction away from the core metal.

3. The steering wheel according to claim 1, wherein at least a ground electrode layer and a first insulating layer are laminated between the integrated electrode layer and the support body in this order in a direction away from the core metal.

4. The steering wheel according to claim 1, wherein at least the heater electrode layer, the ground electrode layer, and the sense electrode layer are laminated on the support body in this order in a direction away from the core metal.

5. The steering wheel according to claim 4, wherein a second insulating layer is provided between the heater electrode layer and the ground electrode layer.

6. The steering wheel according to claim 4, wherein a third insulating layer is provided between the ground electrode layer and the sensing electrode layer.

7. The steering wheel according to any one of claims 1 to 6, wherein the at least one support body includes a plurality of support bodies, and a single resin mold layer is provided so as to collectively cover the plurality of support bodies over the entire circumference of the core metal.

8. The steering wheel according to any one of claims 4 to 6, wherein
the grip body includes, as the support body, a first support body and a second support body,
the heater electrode layer, the ground electrode layer, and the sense electrode layer are laminated in this order in a direction away from the core metal on each of the first support body and the second support body,
the heater electrode layer of the first support body being a layer for heating a portion of the grip body at which the first support body is provided, and
the heater electrode layer of the second support body being a layer for heating a portion of the grip body at which the second support body is provided.

9. The steering wheel according to any one of claims 1 to 6, wherein the sense electrode layer is a layer for sensing gripping of the grip body by the driver, and the heater electrode layer is a layer for heating the grip body based on a sensing result of the sense electrode layer.

10. The steering wheel according to any one of claims 1 to 6, wherein the core metal includes an outer periphery part, and the support body is provided so as to cover a part of the outer periphery part.

11. The steering wheel according to any one of claims 1 to 6, wherein the support body has a recess part with respect to the core metal, and a part of the resin mold layer is formed in the recess part.

12. The steering wheel according to any one of claims 1 to 6, wherein the sense electrode layer is in contact with the resin mold layer.

13. The steering wheel according to any one of claims 1 to 6, wherein the resin mold layer is formed of a first resin, and the support body is formed of a second resin having flexibility equal to or greater than that of the first resin.

14. The steering wheel according to any one of claims 1 to 6, wherein the resin mold layer further covers the core metal.

15. A steering wheel comprising:
a grip body formed so as to be gripped by a driver, wherein
the grip body includes a core metal and a support body provided on the core metal so as to cover at least a part of the core metal,
the support body being provided with one or more electrode layers, and
the grip body being provided with a resin mold layer having flexibility equal to or less than that of the support body, and being provided so as to collectively cover the one or more electrode layers together with the support body.
